# EUROPEAN PATENT SPECIFICATION

(11) **EP 4 236 060 B1**
(45) Date of publication and mention of the grant of the patent: **07.10.2026**
(21) Application number: 21913582.9
(22) Date of filing: 19.11.2021
(51) Int. Cl.: H02P 3/14, A01D 34/00, A01D 34/78, A01D 69/02, H02J 7/14, H02P 6/24

(54) **ELECTRIC TOOL AND CONTROL METHOD THEREFOR**
ELEKTROWERKZEUG UND STEUERUNGSVERFAHREN DAFÜR
OUTIL ÉLECTRIQUE ET SON PROCÉDÉ DE COMMANDE

(30) Priority: 30.12.2020 CN 202011630174; 07.04.2021 CN 202110370760
(43) Date of publication of application: 30.08.2023
(73) Proprietor: Nanjing Chervon Industry Co., Ltd., Nanjing, Jiangsu 211106 (CN)
(72) Inventor: FENG, Jifeng, Nanjing, Jiangsu 211106 (CN); FAN, Xiancheng, Nanjing, Jiangsu 211106 (CN); GUO, Zengbing, Nanjing, Jiangsu 211106 (CN)
(74) Representative: Sun, Yiming
(86) International application number: PCT/CN2021/131632
(87) International publication number: WO 2022/142840

(56) References cited:
- EP-A1- 3 142 219
- EP-B1- 3 257 351
- CN-A- 106 532 794
- CN-A- 107 000 184
- CN-A- 107 969 125
- CN-A- 109 150 063
- CN-A- 111 384 771
- CN-U- 201 541 473
- JP-A- 2000 197 204
- JP-A- 2011 147 375
- JP-A- 2011 147 375
- JP-A- H05 192 027
- US-A1- 2014 059 989

## Description

### TECHNICAL FIELD

The present invention relates to the technical field of power tools, for example, a power tool and a control method therefor.

### BACKGROUND

A self-propelled device is a commonly used large-scale garden power tool. To facilitate operation, a high-current switch, that is, a mechanical switch, of the self-propelled device is generally provided on a handle of the self-propelled device. However, the high-current switch has relatively large electromagnetic radiation, resulting in excessive electromagnetic radiation at the handle. In addition, in the braking process of the power tool, the method of short-circuiting three-phase windings is usually used for braking. When this method is used for braking, the current is uncontrollable, the larger current may damage a power device, and the energy is converted into heat and consumed instead of being effectively used during braking, resulting in a waste of energy.

EP3142219A1 discloses a power tool and a control circuit thereof by which electric energy can be recovered into a battery pack while an electric motor is braked. The control circuit includes a battery, the electric motor, an operation switch, a first control switch, a second control switch, a controller and an inductive element. The control circuit has a discharging state, a braking state and a charging state. In the charging state, the operation switch is in a second switched-on state, the first control switch is switched on, the second control switch is switched off, the battery, the inductive element, the operation switch, the electric motor and the first control switch form a charging circuit, and the electric motor charges the battery. The controller is electrically connected with the operation switch, the first control switch and the second control switch, respectively.

EP3257351B1 discloses a control apparatus for a walk-behind electric lawn mower equipped with an electric motor, a blade cutter connected to the electric motor, a rechargeable battery connected to the electric motor, a motor driver circuit to adjust supply of operating electric power to the electric motor, ON/OFF of a first switching element disposed in a current path connecting the battery and the electric motor and a second switching element interposed in the current path in series with a braking resistor to allow charge current from the electric motor to the braking resistor, wherein operation of the first and second switching elements are controlled based on detected battery temperature and internal voltage of the motor driver circuit.

US2014059989A1 discloses a riding lawnmower including left and right wheels, at least one caster wheel, a lawnmower blade or reel, and a control section. The left and right wheels are independently driven by electric rotary machines to travel. The lawnmower blade or reel is driven for mowing. The control section, in response to turn instruction input by a turn operator, controls the left and right wheels according to preset standard setting conditions, or according to deceleration setting conditions which differ from the standard setting conditions, under which at least one of a vehicle movement speed and vehicle turning speed is decelerated more than under standard setting conditions. The riding lawnmower includes a section designating either standard setting conditions or deceleration setting conditions. In a riding lawnmower, left and right wheels are caused to turn around a turn center position corresponding to a turn instruction according to designated setting conditions.

JP2011147375A provides a battery-driven implement enabling a feed current to a DC motor to be switched by the operation of a starting switch even when the short-circuited obstacle of a semiconductor switching element is caused, and having functions for detecting the short-circuited obstacle of the semiconductor switching element, and to provide a method for controlling the implement.

### SUMMARY

To solve the deficiencies of the related art, an object of the present invention is to provide a self-propelled device that can satisfy a radiation requirement at a handle and has stable switching performance.

To achieve the preceding object, the present invention is set out in the appended set of claims..

The beneficial effect of the present invention is to provide a power tool that can satisfy a radiation requirement at a handle, has stable switching performance, and can achieve safe and fast braking and partial energy recovery during braking.

### BRIEF DESCRIPTION OF DRAWINGS

FIG. 1 is a structural view of a mower as an example;
FIG. 2 is a circuit block diagram of a mower as an example;
FIG. 3 is a circuit diagram of a switching circuit in a mower as an example;
FIG. 4 is a circuit diagram illustrating bus communication in a mower as an example;
FIG. 5 is a control circuit diagram of a relay in a mower as an example;
FIG. 6 is a circuit diagram of a driver circuit in a mower as an example;
FIG. 7 is a flowchart of a control method for a mower as an example;
FIG. 8 is a flowchart of a control method for a mower as an example;
FIG. 9 is a circuit block diagram of a mower as an example;
FIG. 10 is a schematic diagram illustrating control states in a mower as an example;
FIG. 11 is a schematic diagram of a battery pack power supply circuit in a mower as an example;
FIG. 12 is a schematic diagram of an electric motor discharging circuit in a mower as an example;
FIG. 13 is a flowchart of a control method for a mower as an example; and
FIG. 14 is a schematic diagram of a control circuit for a mower as an example.

### DETAILED DESCRIPTION

The present invention is described below in detail in conjunction with drawings and examples. It is to be understood that the examples described herein are intended to explain the present invention and not to limit the present invention. Additionally, it is to be noted that to facilitate description, only part, not all, of structures related to the present invention are illustrated in the drawings.

It is to be noted that a self-propelled device in the present invention may include an automated cleaning device, an automatic watering device, an autonomous snow thrower, and another device that can be moved by manipulation. In the present invention, a mower is used as an example for description.

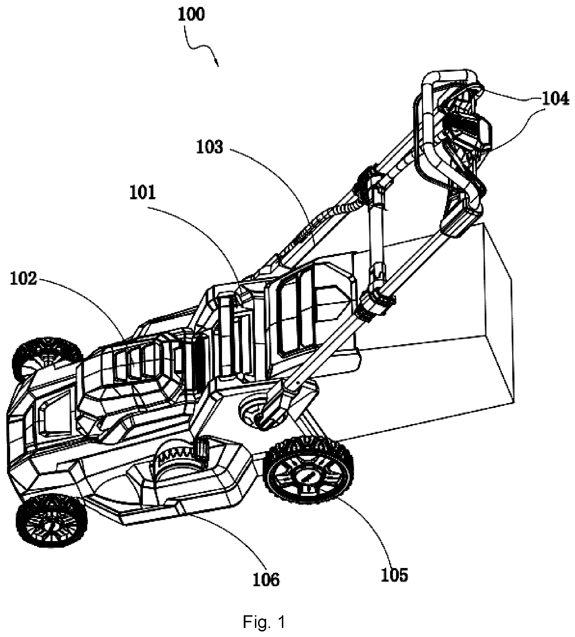

Referring to a structural diagram of a mower shown in FIG. 1, a mower 100 includes a body 101, a battery pack 102, a handle 103, a self-propelled operation switch 104, driving wheels 105, and a cutting accessory 106. The battery pack 102 is used as a power supply and may be composed of a group of battery cells. For example, the battery cells may be connected in series to form a single power supply branch to form a 1P battery pack. The handle 103 is used by a user to operate the mower. The self-propelled operation switch 104 may be a handlebar switch shown in FIG. 1 or a pushbutton switch or another type of electronic switch. When the user presses the self-propelled operation switch 104, the self-propelled device enters a driving state. When the user releases the self-propelled operation switch 104, the self-propelled device enters a braking state. The driving wheels 105 are driven by an electric motor to travel and drive traveling wheels to travel. The driving wheels 105 and the cutting accessory 106 such as a cutting blade may be driven by the same electric motor or driven by different electric motors.

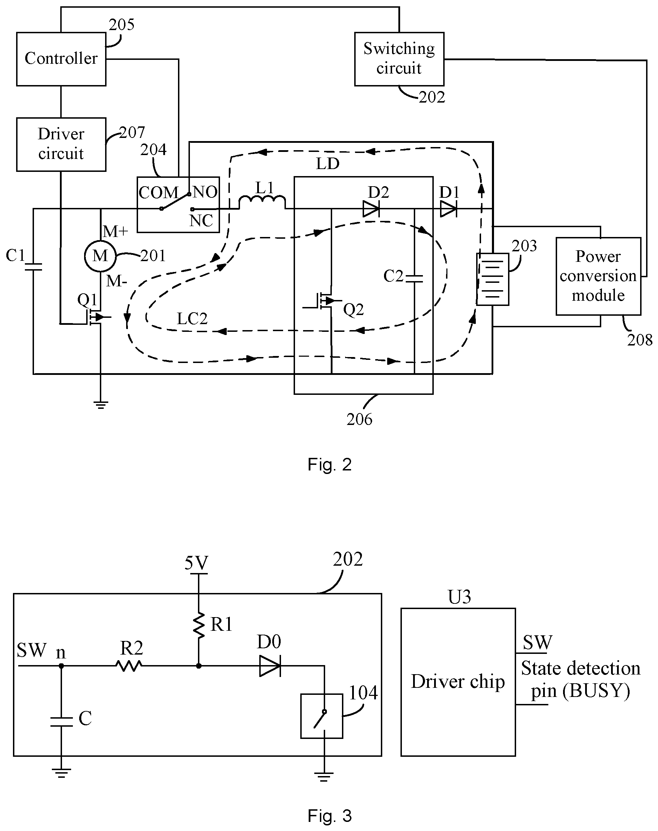

Referring to a circuit block diagram of a mower shown in FIG. 2, the mower may include an electric motor 201, a switching circuit 202, a battery pack 203, a first switching device 204, a controller 205, a boost circuit 206, a driver circuit 207, a power conversion module 208, an inductor L1, a second switching device Q1, a protection capacitor C1, and a diode D1.

In this example, the electric motor 201 is a direct current brushless motor with a positive port M+ and a negative port M-.

In an example, as shown in FIG. 3, the switching circuit 202 includes at least a pull-up resistor R1, a voltage divider resistor R2, a signal output terminal SW, a protection capacitor C, a diode D0, and the self-propelled operation switch 104. Specifically, when the self-propelled operation switch 104 is pressed and turned on, a voltage at a node n is low, and the signal output terminal SW outputs a low-level digital signal 0; and when the self-propelled operation switch 104 is turned off, the voltage at the node n is high, and the signal output terminal SW outputs a high-level digital signal 1. Usually, the switching circuit 202 outputs the low-level signal 0 that represents a power-on signal, that is, the device enters the driving state; and the switching circuit 202 outputs the high-level signal 1 that represents a shutdown signal, that is, the device enters the braking state. Optionally, the switching circuit 202 shown in FIG. 3 further includes a signal transmission control chip U3, one pin of the signal transmission control chip U3 is connected to the signal output terminal SW and used for receiving the power-on signal and the shutdown signal, and one pin BUSY is used as a state detection pin for determining whether a signal transmission bus is idle. It is to be understood that the signal transmission control chip U3 transmits a switch signal to the controller 205 only when detecting that the bus is in an idle state, otherwise the signal transmission control chip U3 does not transmit the power-on signal or the shutdown signal.

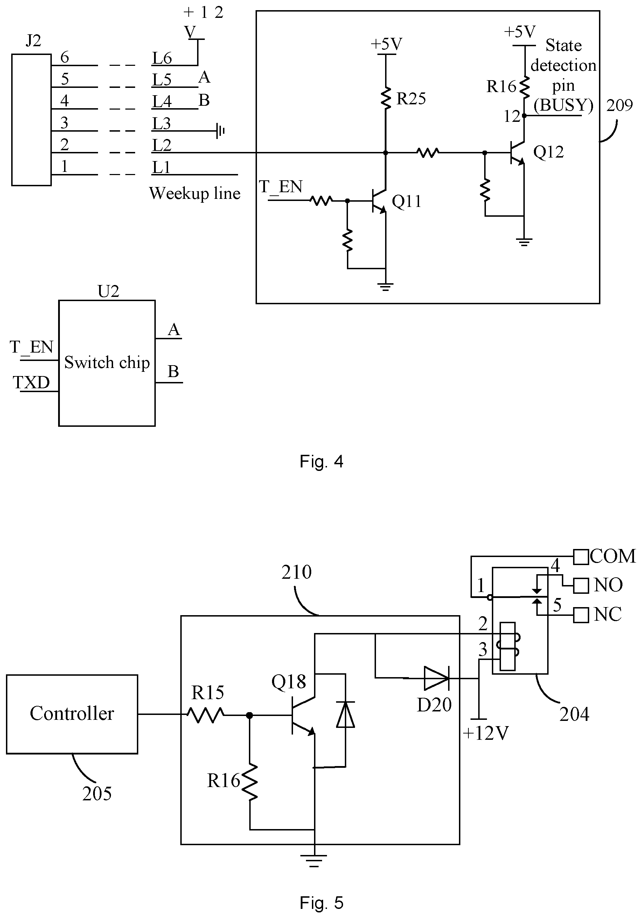

In an example, the switch signal outputted by the switching circuit 202 may be transmitted to the controller 205 through bus communication. A bus communication circuit shown in FIG. 4 mainly includes six communication lines L1 to L6 corresponding to six interfaces 1 to 6 of a signal output port J2, a switch chip U2, and a bus state detection circuit 209. The switch signal is transmitted to the switch chip U2 based on an input terminal TXD, processed by the switch chip U2, and then outputted through pins A and B. Among the communication lines, L6 is connected to the power supply, L3 is grounded, L1 is used as a wakeup line, L2 is a bus state detection line, and L4 and L5 are switch signal receiving lines and connected to the output pins A and B of the switch chip U2. The bus state detection circuit 209 includes at least switching elements Q11 and Q12, a first pull-up resistor R25, and a second pull-up resistor R16. The first pull-up resistor R25 is connected in series with the switching element Q11, and the second pull-up resistor R16 is connected in series with the switching element Q12. A bus state output interface BUSY transmits the current state of the bus to the signal transmission control chip U3 in the switching circuit. Other voltage divider resistors are not introduced one by one without affecting the understanding of the bus state detection circuit. Specifically, when an enable terminal T_EN is at a high level, the switching element Q11 is turned on, the switching element Q12 is not turned on, and a voltage at a node 12 is high so that the output interface BUSY outputs a data signal 1 that represents a high level. When the enable terminal T_EN is at a low level, the switching element Q11 is not turned on, the switching element Q12 is turned on, and the voltage at the node 12 is low so the output interface BUSY outputs a data signal 0 that represents a low level. When BUSY outputs a high level, the bus is in a busy state, and when BUSY outputs a low level, the bus is in the idle state. It is to be understood that when BUSY is at a low level and the bus is in the idle state, the power-on signal and the shutdown signal from the signal transmission control chip U3 are transmitted to the controller 205 through the switch chip U2, the bus, and the signal output port J2. Correspondingly, a receiving port (not shown) corresponding to the signal output port J2 exists in the controller 205.

It is to be noted that the present invention only exemplifies chip pins and a peripheral circuit and should not be limited to the provided example circuit. Any other circuit connections that can implement the preceding functions are within the scope of the present invention.

In an example of the present invention, the first switching device 204 may be a relay or another type of controllable electronic component, such as a transistor, a triode, a metal-oxide-semiconductor field-effect transistor (MOSFET), an analog switch, or a solid state relay. The second switching device Q1 may be a drive switch, for example, a controllable semiconductor power device (such as a field-effect transistor (FET), a bipolar junction transistor (BJT), or an insulated-gate bipolar transistor (IGBT)) or any other types of solid state switches, such the IGBT and the BJT.

A relay control circuit shown in FIG. 5 includes a relay 204, the controller 205, and a relay control module 210, where the relay 204 includes five pins, specifically contacts 1, 4, and 5 and output terminals 2 and 3 of an iron core. The contacts 1, 4, and 5 of the relay correspond to external contacts COM, NO, and NC, respectively. A voltage divider diode D20 is connected in parallel between the output terminals 2 and 3 of the iron core. An anode of the diode D20 is connected to a switching element Q18. A base of Q18 is connected to voltage divider resistors R15 and R16. An input terminal of the voltage divider resistor R15 is connected to the controller 205 and used for receiving a control signal that is outputted by the controller and used for controlling a pull-in state of the relay. Specifically, when the iron core of the relay is not powered on, the contacts 1 and 5 are in a connection state; and only when the iron core is energized, pins are pulled in through the contacts 1 and 4 and the relay is turned on. Therefore, when the switching element Q18 is turned on, pins 2 and 3 are energized, that is, the iron core is energized, the contacts 1 and 4 are pulled in, that is, the contacts COM and NO are turned on, and the relay 204 is in an on state; when the switching element Q18 is turned off, the pins 2 and 3 are not energized, and when the contacts COM and NC are connected, the relay 204 is in a disconnected state. In this manner, the controller 205 may control the on state of the switching element Q18 according to the power-on signal and the shutdown signal outputted by the switching circuit 202, thereby controlling the connection state of the contacts of the relay. Specifically, when detecting the power-on signal, the controller 205 controls the switching element Q18 to be turned on so that the contacts COM and NO of the relay are pulled in; and when detecting the shutdown signal, the controller 205 controls the switching element Q18 to be turned off so that the contacts COM and NC of the relay are connected.

As shown in FIG. 2, the boost circuit 206 includes a switching element Q2, a capacitor C2, and a diode D2 and can boost the electrical energy outputted by the battery pack to supply power to the electric motor 201.

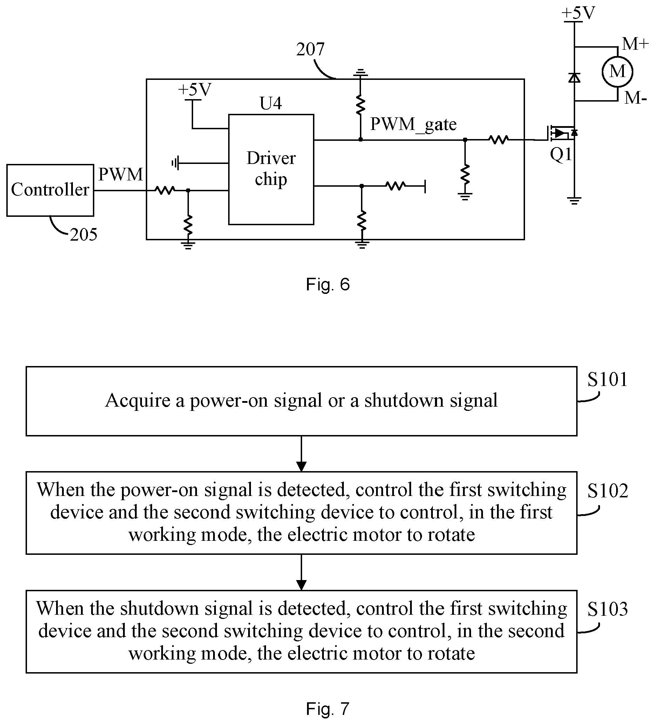

As shown in FIG. 6, the driver circuit 207 includes a driver chip U4 and a peripheral circuit of the driver chip. The driver chip can enhance a drive signal outputted by the controller 205 to control the on state and on frequency of the second switching device Q1, thereby controlling the rotational speed of the electric motor 201. For example, a pulse-width modulation (PWM) control signal outputted by the controller 205 is enhanced by the driver chip U4 and outputted as PWM_gate so as to drive the on frequency and on state of the second switching device Q1. The peripheral circuit of the driver chip U4 is not described in detail without affecting the understanding of the driver circuit 207.

The power conversion module 208 can convert the electrical energy supplied by the battery pack into the electrical energy powering the switching circuit 202.

In a specific implementation, in the circuit shown in FIG. 2, the positive electrode M+ of the electric motor is connected to the contact COM of the relay 204, and the negative electrode M- of the electric motor is connected to a drain of the second switching device Q1. The controller 205 is electrically connected to at least the switching circuit 202, the relay 204, and the second switching device Q1, and the controller 205 may obtain the switch signal outputted by the switching circuit 202 and determine a working state of the device according to the switch signal, such as the driving state or the braking state. Further, in different working states, the controller 205 may control the relay 204 and the second switching device Q1 to control, in different working modes, the electric motor to rotate. Specifically, in the driving state, the controller 205 may control the relay 204 and the second switching device Q1 to control, in a first working mode, the electric motor to rotate; and in the braking state, the controller 205 may control the relay 204 and the second switching device Q1 to control, in a second working mode, the electric motor to rotate. The working modes of the relay 204 and the second switching device Q1 mainly refer to the working modes formed by combinations of different sequences in which the relay 204 and the second switching device Q1 are on and on states of the relay 204 and the second switching device Q1. The first working mode refers to a working mode in which the relay 204 is turned on first and in a first preset time, the second switching device Q1 is turned on. The second working mode refers to a working mode in which the second switching device Q1 is turned off first, the relay 204 is turned off immediately, and in a second preset time, the second switching device Q1 is turned on. Particularly, the second preset time is greater than or equal to zero and less than or equal to the first preset time.

In the present invention, processes of the controller 205 controlling, according to the detected switch signal, the electric motor to rotate are described below.

A process of controlling the electric motor to rotate in the driving state is as follows: the self-propelled operation switch 104 is pressed, the switching circuit 202 outputs a low-level data signal 0 that represents the power-on signal, and when detecting that the bus is idle, the signal transmission control chip U3 in the switching circuit 202 outputs the power-on signal to the controller 205 through bus communication. The controller 205 turns on the switching element Q18 in the control circuit of the relay 204 so that the contacts COM and NO of the relay 204 are connected and in the first preset time, the second switching element Q1 is controlled to be turned on. Therefore, the battery pack 203 forms a first conducting loop LD with the relay 204, the electric motor 201, and the second switching device Q1, the battery pack 203 outputs the electrical energy to supply power to the electric motor, a direction of a power supply current is shown by arrows in FIG. 2, and the electric motor 201 starts to rotate and then drives the device to travel. It is to be understood that the battery pack 203 and the protection capacitor C1 form a charging circuit LC1 (not shown) so as to charge the protection capacitor C1.

A process of controlling the electric motor to rotate in the braking state is as follows: the self-propelled operation switch 104 is released, the switching circuit 202 outputs a high-level data signal 1 that represents the shutdown signal, and when detecting that the bus is idle, the signal transmission control chip U3 in the switching circuit 202 outputs the shutdown signal to the controller 205 through bus communication. The controller 205 controls the second switching device Q1 to be turned off and controls the switching element Q18 in the relay control circuit to be turned off so that the contacts COM and NC of the relay 204 are connected. Further, the controller 205 controls the second switching device Q1 to be turned on so that the electric motor 201 forms a second conducting loop LC2 with at least the second switching device Q1, an inductor L, the diode D1, and the battery pack 203, and the electric motor 201 outputs generated electrical energy to charge the battery pack 203. That is to say, in the second conducting loop LC2, the electric motor 201 is equivalent to a generator before the rotational speed of the electric motor is reduced to zero, and the energy generated by the rotation may be recovered to the battery pack 203, that is, the electric motor 201 outputs a charge current to charge the battery pack 203. Therefore, partial energy recovery is achieved during a braking process of the electric motor, thereby saving the electrical energy outputted by the battery pack.

In an example, after the controller 205 controls the second switching device Q1 to be turned off, the controller 205 may control the relay 204 to be turned off immediately or in a third preset time period. The third preset time is greater than or equal to zero and less than or equal to the first preset time.

In the preceding example, the relay and the drive switch are controlled to be turned on in different sequences and time intervals, so as to control the electric motor to rotate. In this manner, the relay can switch the on state without a current in the circuit, avoiding the relay arcing damage and the failure of the relay caused by a high current, so that the mower has stable switching performance, and at the same time, the problem of excessive electromagnetic radiation caused by the usage of a high-current mechanical switch for electric motor control is avoided.

In the present invention, any working mode that is different from the first working mode and the second working mode and enables the relay 204 to switch in a no-current state falls within the scope of the present invention.

A control method for an electric motor in a mower is described below in conjunction with FIG. 7. The method includes the steps described below.

In S101, a power-on signal or a shutdown signal is acquired.

In S102, when the power-on signal is detected, the first switching device and the second switching device are controlled to control, in the first working mode, the electric motor to rotate.

In S103, when the shutdown signal is detected, the first switching device and the second switching device are controlled to control, in the second working mode, the electric motor to rotate.

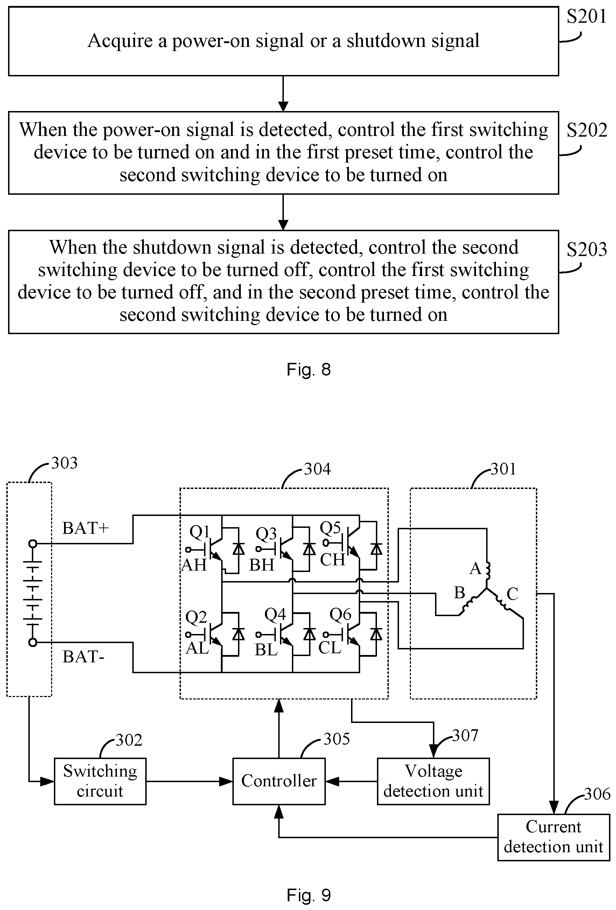

In an example, FIG. 8 shows a control method according to the invention for an electric motor in the mower, and the specific steps are described below.

In S201, a power-on signal or a shutdown signal is acquired.

In S202, when the power-on signal is detected, the first switching device is controlled to be turned on and in the first preset time, the second switching device is controlled to be turned on.

In S203, when the shutdown signal is detected, the second switching device is controlled to be turned off, the first switching device is controlled to be turned off, and in the second preset time, the second switching device is controlled to be turned on.

Referring to a circuit block diagram of a mower shown in FIG. 9, the mower may include an electric motor 301, a switching circuit 302, a battery pack 303, an inverter circuit 304, a controller 305, a current detection unit 306, and a voltage detection unit 307.

The electric motor 301 is a brushless direct current motor.

The switching circuit 302 is mainly used for outputting signals for controlling the tool to be powered on or shut down. Specifically, for the structure of the switching circuit 302, reference may be made to the switching circuit shown in FIG. 3, and the details are not repeated here. In addition, for the communication manner between the switching circuit 302 and the controller 305, reference may be made to the bus communication circuit shown in FIG. 4, and the details are not repeated here.

The inverter circuit 304 is electrically connected to three-phase stator windings of the electric motor 301. When the on state of the switching element in the inverter circuit is switched, the energized state of the corresponding stator winding is also switched so that a rotation state of the electric motor, such as the rotational speed, a direction of rotation, or torque, is also changed. In an example, as shown in FIG. 9, the inverter circuit 304 includes six switching elements Q1, Q2, Q3, Q4, Q5, and Q6. Each gate terminal of the switching elements is electrically connected to the controller 305 and used for receiving a control signal from the controller 305. A drain or source of each switching element is connected to stator windings A, B, and C of the electric motor 301. The switching elements Q1 to Q6 receive the control signal from the controller 305 to change respective on states, thereby changing a current loaded to the stator windings of the electric motor 301 by the battery pack 303. In an example, the inverter circuit 304 may be a three-phase bridge driver circuit including six controllable semiconductor power devices (such as the FET, the BJT, and the IGBT), and each phase bridge circuit includes high-side switching elements and low-side switching elements. It is to be understood that the preceding switching elements may be any other types of solid state switches such as the IGBTs or the BJTs.

In an example, Q1, Q3, and Q5 are defined as the high-side switching elements of each phase bridge, and Q2, Q4, and Q6 are the low-side switching elements of each phase bridge. The high-side switching elements and the low-side switching elements of each phase bridge circuit are connected to the same phase winding. The switching elements Q1 and Q2 are connected to the first phase winding A, the switching elements Q3 and Q4 are connected to the second phase winding B, and the switching elements Q5 and Q6 are connected to the third phase winding C. The three-phase windings A, B, and C of the brushless motor are connected to the battery pack 303 through a bridge composed of the six switching elements Q1 to Q6. Particularly, when the controller 305 controls the high-side switching element to be turned on, the corresponding low-side switching element is turned off. That is to say, in the present invention, the three groups of switching elements are in a complementary conduction mode, that is, when the high-side switching element is turned on, the corresponding low-side switching element is turned off, and when the low-side switch is turned on, the corresponding high-side switch is turned off. Therefore, in the present invention, no open phase exists in the stator windings.

The current detection unit 306 is used for detecting a phase current of the stator windings in the electric motor in real time. The controller 305 may estimate the position of the rotor in the electric through the acquired phase current of the stator windings. Particularly, the controller 305 may calculate the rotational speed of the electric motor according to the phase current. Specifically, the rotational speed of the electric motor may be estimated according to relevant parameters of the phase current such as frequency.

The voltage detection unit 307 is used for detecting the magnitude of the bus voltage in the control circuit in real time. The controller 305 compares the acquired bus voltage data with a preset voltage threshold and when the bus voltage is greater than or equal to the voltage threshold, can control the brake element to change a control instruction so that the magnitude of the brake current is less than a set back-charge current threshold. Therefore, components in the control circuit can be prevented from being damaged by a relatively large back-charge current.

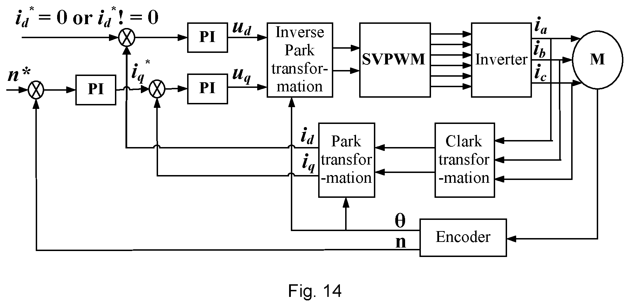

In an example, as shown in FIG. 14, the control circuit of the mower is a field-oriented control (FOC) double closed-loop control circuit having a speed regulation system with an inner current loop and an outer rotational speed loop. The inner current loop is nested in the outer rotational speed loop, a speed regulator outputs a given current, and the inner current loop actually controls the torque of the electric motor. Specifically, the stator current of the electric motor is decomposed into excitation component current *i_{d}*^{*} and torque component current *i_{q}*^{*}*.* Under normal circumstances, the excitation current given value *i_{d}*^{*} is set to 0, the expected rotational speed of the electric motor is set to a given value *n*^{*} of a rotational speed loop, and an output value of a proportional-integral-derivative (PID) regulator into which the rotational speed loop is inputted is used as the given value *i_{q}*^{*} of a current loop torque component. The outputs of *i_{d}*^{*} and *i_{q}*^{*} via the PID regulator are *u_{d}* and *u_{q}. u_{d}* and *u_{q}* go through inverse Park transformation and space vector pulse-width modulation (SVPWM), a PWM wave is outputted to a drive terminal of an inverter, and the output of the inverter is three-phase currents *iₐ, i_{b},* and *i_{c}* controlled by the electric motor. In this example, when the bus voltage is greater than the voltage threshold, the controller may control the inverter circuit to change the on state to change the current outputted by the electric motor so that the current *i_{q}* that can back-charge the battery pack is less than the back-charge current threshold.

In an example, after determining the rotational speed of the electric motor according to the phase current, the controller 305 may calculate the position of the rotor in different methods according to different rotational speeds. For example, when the rotational speed is greater than or equal to a first rotational speed threshold, a back electromotive force of the electric windings may be estimated through the acquired phase current, and then the position of the rotor of the electric motor is estimated according to the back electromotive force. The method of calculating the position of the rotor according to the back electromotive force has proven applications, and the details are not described in detail here. For another example, when the rotational speed is less than or equal to a second rotational speed threshold, the controller may estimate the position of the rotor based on a high-frequency electrical signal loaded to the stator windings. The first rotational speed threshold is greater than the second rotational speed threshold. In a specific implementation, the controller 305 may output the high-frequency electrical signal, load the high-frequency electrical signal to the three-phase stator windings of the electric motor, and acquire a response signal outputted by the stator windings based on the high-frequency electrical signal. The response signal may be a high-frequency phase current signal having a high-frequency amplitude. Further, the controller may estimate the position of the rotor according to a relative relationship between the response signal and a preset rotor position. For example, the controller may estimate the position of the rotor according to a relative relationship between the high-frequency amplitude of the response signal and the preset rotor position. It is to be noted that since the component of the high-frequency response signal on a quadrature axis is correlated to a rotor position error, in the case where the amplitude of the high-frequency response signal converges to zero, the corresponding preset rotor position also converges so as to obtain a real rotor position. In the present invention, a direction where the rotor is located is defined as a direct axis, and a direction perpendicular to the direct axis is defined as the quadrature axis.

In an example, the controller 305 controls the on states of the switching elements in the inverter circuit 304 according to the detected power-on signal and the estimated rotor so that the electric motor obtains drive torque to drive the cutting blade to mow the grass or drive the driving wheels to travel. In addition, when the controller 305 detects the power-on signal outputted by the switching circuit 302, the on states of the switching elements in the inverter circuit 304 may be changed in conjunction with the current rotor position so that the electric motor 301 obtains brake torque for reverse acceleration to implement torque brake. The direction of the brake torque is opposite to the direction of the drive torque, that is, the brake torque is inverse torque.

In an example, the controller 305 may control the inverter circuit to change the on state according to the brake instruction outputted by the brake element and the estimated rotor position so that the electric motor obtains the brake torque for direction acceleration. Particularly, the brake instruction includes a rotational speed reduction instruction for reducing the rotational speed of the electric motor, where the rotational speed reduction instruction is capable of including multiple rotational speed gears, and different rotational speed gears correspond to brake torque of different magnitudes. That is to say, when braking through the brake element, the electric motor obtains the brake torque for reverse acceleration, and the rotational speed is reduced to a certain smaller value or zero. If a brake gear included in the brake instruction is to reduce the rotational speed of the electric motor to a certain smaller value, after the rotational speed of the electric motor is reduced to a certain value, the electric motor can coast until the rotational speed is zero. **It** is to be understood that when the electric motor obtains the brake torque and brakes in real time, the rotational speed of the electric motor is reduced rapidly, but the direction of rotation of the electric motor does not change.

**In** the present invention, under the action of the brake torque, the brake current for the reverse acceleration of the electric motor is generated in the stator windings of the electric motor, and the brake current flows out from the electric motor side to the battery pack to charge the battery pack, thereby achieving partial energy recovery while the electric motor brakes rapidly.

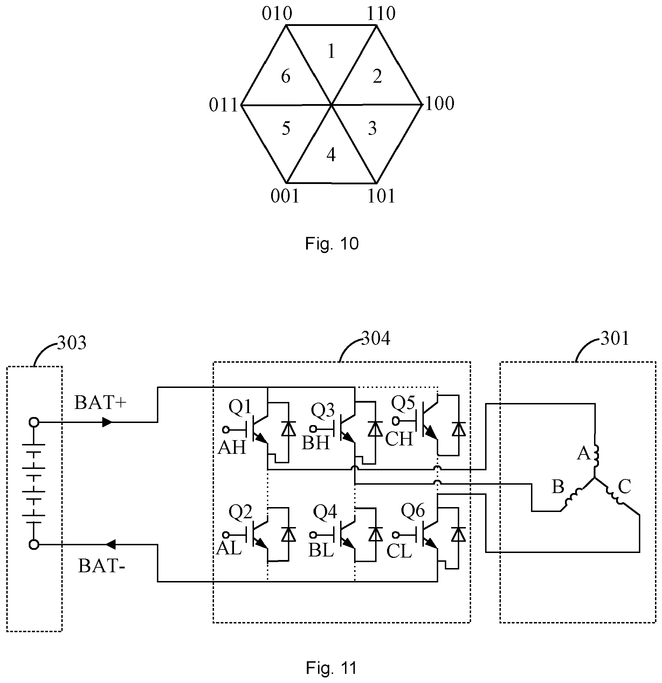

In the present invention, the switching elements in the inverter circuit have six on states, and different on states correspond to different signal combinations outputted by the controller. Referring to a sector diagram shown in FIG. 10, it indicates that within one electrical cycle, six driving states, that is, the six on states, of the inverter circuit correspond to six signal combinations. Particularly, the correspondence between the on states of the switching elements in the inverter circuit and the signal combinations is shown in Table 1.

**Table 1**

| Signal combination | Switching elements that are turned on |
|---|---|
| (1,1,0) | Q1 Q3 Q6 |
| (1,0,0) | Q1 Q4 Q6 |
| (1,0,1) | Q1 Q4 Q5 |
| (0,0,1) | Q2 Q4 Q5 |
| (0,1,1) | Q2 Q3 Q5 |
| (0,1,0) | Q2 Q3 Q6 |

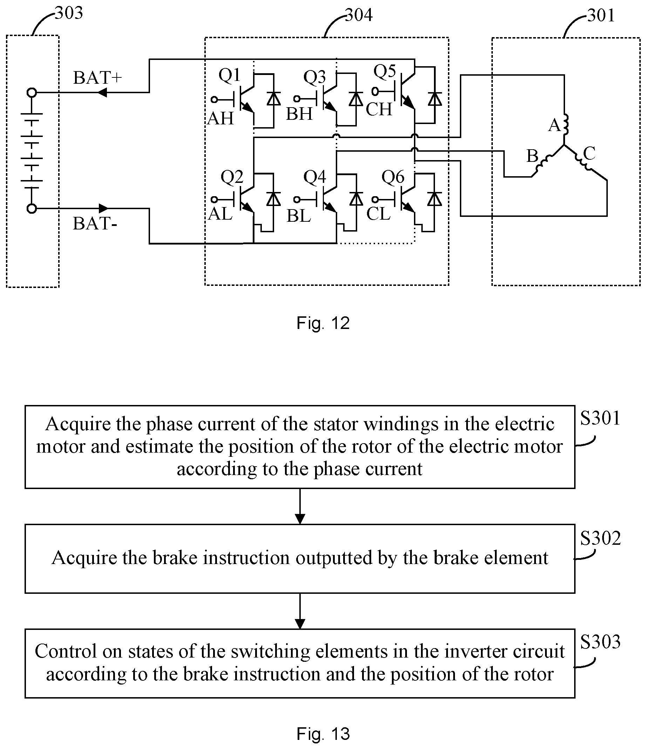

It is to be noted that in the present invention, the three-phase stator windings of the electric motor are turned on under any signal combination, that is to say, no open phase exists in the three-phase windings during the driving and braking processes of the electric motor. A flow process of the current in the three-phase windings in the electric motor in which the three-phase windings are all turned on is not easy to describe. In the following, only the direction of the current in the bus in the circuit is used for representing the inflow or outflow of the three-phase current in the electric motor. For example, as shown in FIG. 11, under the action of the drive torque of the electric motor, the switching elements Q1, Q3, and Q6 in the inverter circuit are turned on, the corresponding switching elements Q2, Q4, and Q5 are turned off, and the direction of the current in the bus is from a positive terminal BAT+ of the battery pack to the electric motor, so as to supply power to the electric motor. As shown in FIG. 12, under the action of the brake torque of the electric motor, the switching elements Q2, Q4, and Q5 in the inverter circuit are turned on, the corresponding switching elements Q1, Q3, and Q6 are turned off, and the direction of the current in the bus is from the positive terminal BAT+ of the battery pack to the battery pack, so as to charge the battery pack.

In the example of the present invention, the electric motor brakes through the inverse torque so that the electric motor brakes rapidly with relatively large reverse acceleration. At the same time, the brake current generated by the electric motor during the braking process charges the battery pack, thereby achieving partial energy recovery and reducing energy waste during braking.

A control method for the electric motor braking in the mower is described below in conjunction with FIG. 13. The method includes the steps described below.

In S301, the phase current of the stator windings in the electric motor is acquired and the position of the rotor of the electric motor is estimated according to the phase current.

In S302, the brake instruction outputted by the brake element is acquired.

In S303, on states of the switching elements in the inverter circuit are controlled according to the brake instruction and the position of the rotor.

It is to be noted that the brake instruction includes the rotational speed reduction instruction for reducing the rotational speed of the electric motor, where the rotational speed reduction instruction is capable of including multiple rotational speed gears, and different rotational speed gears correspond to brake torque of different magnitudes.

## Claims

1. A power tool (100), comprising:
an electric motor (201);
a battery pack (203) for providing a power supply;
a switching circuit (202) for outputting a power-on signal or a shutdown signal;
a first switching device (204) for controlling a power-on state of the electric motor;
a second switching device (Q1) for driving the electric motor to rotate; and
a controller (205) electrically connected to at least the first switching device, and the second switching device;
wherein the controller is configured to:
when the power-on signal is detected, control the first switching device and the second switching device to control, in a first working mode, the electric motor to rotate; and
when the shutdown signal is detected, control the first switching device and the second switching device to control, in a second working mode, the electric motor to rotate;
when the power-on signal is detected, the battery pack forms a first conducting loop with at least the first switching device, the electric motor, and the second switching device; and
when the shutdown signal is detected, the electric motor forms a second conducting loop with at least the first switching device, the battery pack, and the second switching device,
wherein in the first conducting loop, the battery pack outputs electrical energy to supply power to the electric motor; and in the second conducting loop, the electric motor outputs generated electrical energy to charge the battery pack,
**characterized in that**
the controller is electrically connected also to the switching circuit;
wherein the first switching device comprises a relay (204),
wherein when the power-on signal is detected, control the first switching device to be turned on and in a first preset time, control the second switching device to be turned on; and when the shutdown signal is detected, control the second switching device to be turned off, control the first switching device to be turned off, and in a second preset time, control the second switching device to be turned on,
wherein the second preset time is greater than or equal to zero and less than or equal to the first preset time.

2. The power tool of claim 1, wherein the power-on signal or the shutdown signal outputted by the switching circuit is transmitted to the controller through bus communication.

3. The power tool of claim 2, wherein the power tool further comprises a bus state detection circuit (209) for detecting whether a signal transmission bus is idle, and the power-on signal or the shutdown signal outputted by the switching circuit is transmitted to the controller through the signal transmission bus when the signal transmission bus is idle.

4. The power tool of claim 1, further comprising:
a driver circuit (207) connected between the controller and the second switching device and used for controlling an on state and an on frequency of the second switching device.

5. The power tool of claim 1, wherein the power tool is a mower, the switching circuit comprises a self-propelled operation switch (104).

6. A control method for a power tool (100), wherein the power tool comprises
an electric motor (201);
a switching circuit (202) for outputting a power-on signal or a shutdown signal;
a battery pack (203) for providing a power supply;
a first switching device (204) for controlling a power-on state of the electric motor;
a second switching device (Q1) for driving the electric motor to rotate; and
a controller (205) electrically connected to at least the first switching device, and the second switching device;
wherein the control method comprises:
when the power-on signal is detected, controlling the first switching device and the second switching device to control, in a first working mode, the electric motor to rotate; and
when the shutdown signal is detected, controlling the first switching device and the second switching device to control, in a second working mode, the electric motor to rotate;
when the power-on signal is detected, the battery pack forms a first conducting loop with at least the first switching device, the electric motor, and the second switching device; and
when the shutdown signal is detected, the electric motor forms a second conducting loop with at least the first switching device, the battery pack, and the second switching device,
wherein in the first conducting loop, the battery pack outputs electrical energy to supply power to the electric motor; and in the second conducting loop, the electric motor outputs generated electrical energy to charge the battery pack,
**characterized in that**
the controller is electrically connected also to the switching circuit;
wherein the first switching device comprises a relay (204),
wherein when the power-on signal is detected, control the first switching device to be turned on and in a first preset time, control the second switching device to be turned on; and when the shutdown signal is detected, control the second switching device to be turned off, control the first switching device to be turned off, and in a second preset time, control the second switching device to be turned on,
wherein the second preset time is greater than or equal to zero and less than or equal to the first preset time.

## Patentansprüche

1. Ein Elektrowerkzeug (100), umfassend:
einen Elektromotor (201);
einen Akkupack (203) zum Bereitstellen einer Stromversorgung;
eine Schaltschaltung (202) zum Ausgeben eines Einschaltsignals oder eines Abschaltsignals;
eine erste Schaltvorrichtung (204) zum Steuern eines Einschaltzustands des Elektromotors;
eine zweite Schaltvorrichtung (Q1) zum Antreiben des Elektromotors zum Rotieren; und
eine Steuereinrichtung (205), die elektrisch mit zumindest der ersten Schaltvorrichtung und der zweiten Schaltvorrichtung verbunden ist;
wobei die Steuereinrichtung dazu ausgebildet ist:
wenn das Einschaltsignal detektiert wird, die erste Schaltvorrichtung und die zweite Schaltvorrichtung zu steuern, um in einem ersten Arbeitsmodus den Elektromotor zum Rotieren zu steuern; und
wenn das Abschaltsignal detektiert wird, die erste Schaltvorrichtung und die zweite Schaltvorrichtung zu steuern, um in einem zweiten Arbeitsmodus den Elektromotor zum Rotieren zu steuern;
wenn das Einschaltsignal detektiert wird, bildet der Akkupack mit zumindest der ersten Schaltvorrichtung, dem Elektromotor und der zweiten Schaltvorrichtung eine erste leitende Schleife; und
wenn das Abschaltsignal detektiert wird, bildet der Elektromotor mit zumindest der ersten Schaltvorrichtung, dem Akkupack und der zweiten Schaltvorrichtung eine zweite leitende Schleife,
wobei in der ersten leitenden Schleife der Akkupack elektrische Energie ausgibt, um den Elektromotor mit Energie zu versorgen; und in der zweiten leitenden Schleife der Elektromotor erzeugte elektrische Energie ausgibt, um den Akkupack zu laden,
**dadurch gekennzeichnet, dass**
die Steuereinrichtung auch mit der Schaltschaltung elektrisch verbunden ist;
wobei die erste Schaltvorrichtung ein Relais (204) umfasst,
wobei, wenn das Einschaltsignal detektiert wird, die erste Schaltvorrichtung so gesteuert wird, dass sie eingeschaltet wird, und in einer ersten voreingestellten Zeit die zweite Schaltvorrichtung so gesteuert wird, dass sie eingeschaltet wird; und wenn das Abschaltsignal detektiert wird, die zweite Schaltvorrichtung so gesteuert wird, dass sie ausgeschaltet wird, die erste Schaltvorrichtung so gesteuert wird, dass sie ausgeschaltet wird, und in einer zweiten voreingestellten Zeit die zweite Schaltvorrichtung so gesteuert wird, dass sie eingeschaltet wird,
wobei die zweite voreingestellte Zeit größer als oder gleich null und kleiner als oder gleich der ersten voreingestellten Zeit ist.

2. Das Elektrowerkzeug nach Anspruch 1, wobei das durch die Schaltschaltung ausgegebene Einschaltsignal oder Abschaltsignal durch Buskommunikation an die Steuereinrichtung übertragen wird.

3. Das Elektrowerkzeug nach Anspruch 2, wobei das Elektrowerkzeug ferner eine Buszustandsdetektionsschaltung (209) zum Detektieren, ob ein Signalübertragungsbus frei ist, umfasst, und das durch die Schaltschaltung ausgegebene Einschaltsignal oder Abschaltsignal durch den Signalübertragungsbus an die Steuereinrichtung übertragen wird, wenn der Signalübertragungsbus frei ist.

4. Das Elektrowerkzeug nach Anspruch 1, ferner umfassend:
eine Treiberschaltung (207), die zwischen der Steuereinrichtung und der zweiten Schaltvorrichtung verbunden ist und zum Steuern eines Einschaltzustands und einer Einschaltfrequenz der zweiten Schaltvorrichtung verwendet wird.

5. Das Elektrowerkzeug nach Anspruch 1, wobei das Elektrowerkzeug ein Mäher ist, die Schaltschaltung einen Selbstfahr-Betriebsschalter (104) umfasst.

6. Steuerungsverfahren für ein Elektrowerkzeug (100), wobei das Elektrowerkzeug umfasst
einen Elektromotor (201);
eine Schaltschaltung (202) zum Ausgeben eines Einschaltsignals oder eines Abschaltsignals;
einen Akkupack (203) zum Bereitstellen einer Stromversorgung;
eine erste Schaltvorrichtung (204) zum Steuern eines Einschaltzustands des Elektromotors;
eine zweite Schaltvorrichtung (Q1) zum Antreiben des Elektromotors zum Rotieren; und
eine Steuereinrichtung (205), die elektrisch mit zumindest der ersten Schaltvorrichtung und der zweiten Schaltvorrichtung verbunden ist;
wobei das Steuerungsverfahren umfasst:
wenn das Einschaltsignal detektiert wird, Steuern der ersten Schaltvorrichtung und der zweiten Schaltvorrichtung, um in einem ersten Arbeitsmodus den Elektromotor zum Rotieren zu steuern; und
wenn das Abschaltsignal detektiert wird, Steuern der ersten Schaltvorrichtung und der zweiten Schaltvorrichtung, um in einem zweiten Arbeitsmodus den Elektromotor zum Rotieren zu steuern;
wenn das Einschaltsignal detektiert wird, bildet der Akkupack mit zumindest der ersten Schaltvorrichtung, dem Elektromotor und der zweiten Schaltvorrichtung eine erste leitende Schleife; und
wenn das Abschaltsignal detektiert wird, bildet der Elektromotor mit zumindest der ersten Schaltvorrichtung, dem Akkupack und der zweiten Schaltvorrichtung eine zweite leitende Schleife,
wobei in der ersten leitenden Schleife der Akkupack elektrische Energie ausgibt, um den Elektromotor mit Energie zu versorgen; und in der zweiten leitenden Schleife der Elektromotor erzeugte elektrische Energie ausgibt, um den Akkupack zu laden,
**dadurch gekennzeichnet, dass**
die Steuereinrichtung auch mit der Schaltschaltung elektrisch verbunden ist;
wobei die erste Schaltvorrichtung ein Relais (204) umfasst,
wobei, wenn das Einschaltsignal detektiert wird, die erste Schaltvorrichtung so gesteuert wird, dass sie eingeschaltet wird, und in einer ersten voreingestellten Zeit die zweite Schaltvorrichtung so gesteuert wird, dass sie eingeschaltet wird; und wenn das Abschaltsignal detektiert wird, die zweite Schaltvorrichtung so gesteuert wird, dass sie ausgeschaltet wird, die erste Schaltvorrichtung so gesteuert wird, dass sie ausgeschaltet wird, und in einer zweiten voreingestellten Zeit die zweite Schaltvorrichtung so gesteuert wird, dass sie eingeschaltet wird,
wobei die zweite voreingestellte Zeit größer als oder gleich null und kleiner als oder gleich der ersten voreingestellten Zeit ist.

## Revendications

1. Un outil électrique (100), comprenant:
un moteur électrique (201);
un bloc-batterie (203) destiné à fournir une alimentation électrique;
un circuit de commutation (202) destiné à délivrer un signal de mise sous tension ou un signal d'arrêt;
un premier dispositif de commutation (204) destiné à commander un état de mise sous tension du moteur électrique;
un second dispositif de commutation (Q1) destiné à entraîner le moteur électrique en rotation; et
une unité de commande (205) connectée électriquement au moins au premier dispositif de commutation et au second dispositif de commutation;
dans lequel l'unité de commande est configurée pour:
lorsque le signal de mise sous tension est détecté, commander le premier dispositif de commutation et le second dispositif de commutation de manière à commander, dans un premier mode de fonctionnement, la rotation du moteur électrique; et
lorsque le signal d'arrêt est détecté, commander le premier dispositif de commutation et le second dispositif de commutation de manière à commander, dans un second mode de fonctionnement, la rotation du moteur électrique;
lorsque le signal de mise sous tension est détecté, le bloc-batterie forme une première boucle conductrice avec au moins le premier dispositif de commutation, le moteur électrique et le second dispositif de commutation; et
lorsque le signal d'arrêt est détecté, le moteur électrique forme une seconde boucle conductrice avec au moins le premier dispositif de commutation, le bloc-batterie et le second dispositif de commutation,
dans lequel, dans la première boucle conductrice, le bloc-batterie délivre de l'énergie électrique pour alimenter le moteur électrique; et dans la seconde boucle conductrice, le moteur électrique délivre de l'énergie électrique générée pour charger le bloc-batterie,
**caractérisé en ce que**
l'unité de commande est également connectée électriquement au circuit de commutation;
dans lequel le premier dispositif de commutation comprend un relais (204),
dans lequel, lorsque le signal de mise sous tension est détecté, commander le premier dispositif de commutation pour qu'il soit mis en conduction et, dans un premier temps prédéfini, commander le second dispositif de commutation pour qu'il soit mis en conduction; et lorsque le signal d'arrêt est détecté, commander le second dispositif de commutation pour qu'il soit mis hors conduction, commander le premier dispositif de commutation pour qu'il soit mis hors conduction, et, dans un second temps prédéfini, commander le second dispositif de commutation pour qu'il soit mis en conduction,
dans lequel le second temps prédéfini est supérieur ou égal à zéro et inférieur ou égal au premier temps prédéfini.

2. L'outil électrique selon la revendication 1, dans lequel le signal de mise sous tension ou le signal d'arrêt délivré par le circuit de commutation est transmis à l'unité de commande par communication de bus.

3. L'outil électrique selon la revendication 2, dans lequel l'outil électrique comprend en outre un circuit de détection d'état de bus (209) destiné à détecter si un bus de transmission de signal est libre, et le signal de mise sous tension ou le signal d'arrêt délivré par le circuit de commutation est transmis à l'unité de commande par le bus de transmission de signal lorsque le bus de transmission de signal est libre.

4. L'outil électrique selon la revendication 1, comprenant en outre:
un circuit pilote (207) connecté entre l'unité de commande et le second dispositif de commutation et utilisé pour commander un état de conduction et une fréquence de conduction du second dispositif de commutation.

5. L'outil électrique selon la revendication 1, dans lequel l'outil électrique est une tondeuse, le circuit de commutation comprend un interrupteur de fonctionnement automoteur (104).

6. Procédé de commande pour un outil électrique (100), dans lequel l'outil électrique comprend
un moteur électrique (201);
un circuit de commutation (202) destiné à délivrer un signal de mise sous tension ou un signal d'arrêt;
un bloc-batterie (203) destiné à fournir une alimentation électrique;
un premier dispositif de commutation (204) destiné à commander un état de mise sous tension du moteur électrique;
un second dispositif de commutation (Q1) destiné à entraîner le moteur électrique en rotation; et
une unité de commande (205) connectée électriquement au moins au premier dispositif de commutation et au second dispositif de commutation;
dans lequel le procédé de commande comprend:
lorsque le signal de mise sous tension est détecté, commander le premier dispositif de commutation et le second dispositif de commutation de manière à commander, dans un premier mode de fonctionnement, la rotation du moteur électrique; et
lorsque le signal d'arrêt est détecté, commander le premier dispositif de commutation et le second dispositif de commutation de manière à commander, dans un second mode de fonctionnement, la rotation du moteur électrique;
lorsque le signal de mise sous tension est détecté, le bloc-batterie forme une première boucle conductrice avec au moins le premier dispositif de commutation, le moteur électrique et le second dispositif de commutation; et
lorsque le signal d'arrêt est détecté, le moteur électrique forme une seconde boucle conductrice avec au moins le premier dispositif de commutation, le bloc-batterie et le second dispositif de commutation,
dans lequel, dans la première boucle conductrice, le bloc-batterie délivre de l'énergie électrique pour alimenter le moteur électrique; et dans la seconde boucle conductrice, le moteur électrique délivre de l'énergie électrique générée pour charger le bloc-batterie,
**caractérisé en ce que**
l'unité de commande est également connectée électriquement au circuit de commutation;
dans lequel le premier dispositif de commutation comprend un relais (204),
dans lequel, lorsque le signal de mise sous tension est détecté, commander le premier dispositif de commutation pour qu'il soit mis en conduction et, dans un premier temps prédéfini, commander le second dispositif de commutation pour qu'il soit mis en conduction; et lorsque le signal d'arrêt est détecté, commander le second dispositif de commutation pour qu'il soit mis hors conduction, commander le premier dispositif de commutation pour qu'il soit mis hors conduction, et, dans un second temps prédéfini, commander le second dispositif de commutation pour qu'il soit mis en conduction,
dans lequel le second temps prédéfini est supérieur ou égal à zéro et inférieur ou égal au premier temps prédéfini.
